(19) Europäisches Patentamt
European Patent Office
Office européen des brevets

(11) **EP 3 660 463 B1**

## (12) EUROPÄISCHE PATENTSCHRIFT

(45) Veröffentlichungstag und Bekanntmachung des Hinweises auf die Patenterteilung:
**06.09.2023   Patentblatt 2023/36**

(21) Anmeldenummer: **19212051.7**

(22) Anmeldetag: **28.11.2019**

(51) Internationale Patentklassifikation (IPC):
*G01D 1/10* (2006.01)   *G01D 4/00* (2006.01)
*G01D 1/12* (2006.01)   *G01D 1/18* (2006.01)
*G01D 9/00* (2006.01)   *G01D 21/00* (2006.01)
*G01K 17/10* (2006.01)

(52) Gemeinsame Patentklassifikation (CPC):
**G01D 9/005; G01D 1/10; G01D 1/12; G01D 1/18; G01D 4/002; G01D 21/00; G01K 17/10**

(54) **VERFAHREN ZUR SPEICHERUNG UND ÜBERTRAGUNG VON MESSDATEN, EINE VERARBEITUNGSEINHEIT ZUR DURCHFÜHRUNG DES VERFAHRENS UND EINE VERBRAUCHSWERTERFASSUNGSEINHEIT MIT EINER SOLCHEN VERARBEITUNGSEINHEIT**

METHOD FOR LOGGING AND TRANSMITTING MEASUREMENT DATA, PROCESSING UNIT FOR IMPLEMENTING THE METHOD AND CONSUMPTION RECORDING DEVICE COMPRISING SUCH PROCESSING UNIT

MÉTHODE D'ENREGISTREMENT ET DE TRANSMISSION DE DONNÉES DE MESURE, UNITÉ POUR L'IMPLÉMENTATION D'UNE TELLE MÉTHODE ET ENREGISTREUR DE CONSOMMATION COMPRENANT UNE TELLE UNITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.11.2018   DE 102018130242**

(43) Veröffentlichungstag der Anmeldung:
**03.06.2020   Patentblatt 2020/23**

(73) Patentinhaber: **QUNDIS GmbH**
**99098 Erfurt (DE)**

(72) Erfinder: **LEIPOLD, Jörg**
**99974 Mühlhausen (DE)**

(74) Vertreter: **Liedtke & Partner Patentanwälte**
**Gerhart-Hauptmann-Straße 10/11**
**99096 Erfurt (DE)**

(56) Entgegenhaltungen:
**EP-A1- 1 662 240      DE-B3- 10 258 472**
**JP-A- 2001 241 975**

**Beschreibung**

Die Erfindung betrifft ein Verfahren zur Speicherung und Übertragung von Messdaten gemäß dem Oberbegriff des Anspruchs 1. Weiterhin betrifft die Erfindung eine Verarbeitungseinheit zur Durchführung eines solchen Verfahrens und eine Verbrauchswerterfassungseinheit mit einer solchen Verarbeitungseinheit.

Aus dem Stand der Technik sind Verfahren zur Speicherung und Übertragung von mittels einer Verbrauchswerterfassungseinheit erfassten Messwerten bekannt. Dabei wird ein Verfahren nach der Norm DIN EN 13757-3 zur Übertragung gespeicherter und aus den Messwerten resultierender Messdaten verwendet, wobei die Messdaten in Form von Binärcodes gespeichert und übertragen werden. Bevorzugt werden Messdaten jeweils in Form von 8 Bit, maximal 64 Bit, gespeichert und übertragen.

Beispielsweise ist eine Software konfiguriert, beispielsweise 24 Messwerte mit insgesamt 25 Byte zu übertragen, wobei ein Start-Messwert mit 16 Bit codiert ist. Alle weiteren Messdaten werden mit 8 Bit codiert. In herkömmlichen Verfahren werden jeweils Differenzwerte zum vorherigen Wert gespeichert. Wenn die Temperaturauflösung 0,1°C betragen soll, sind die Messdaten mit 8 Bit beschränkt, wobei beispielsweise die Differenz von ±12,7°C, wobei -0 zur Darstellung eines ungültigen Werts und 0 zur Darstellung eines unveränderten neu ermittelten Messwerts verwendet werden, betragen dürfen. In diesen Verfahren führen fehlerhaft ermittelte Messwerte bzw. ungültige Messwerte und Differenzwerte, die beispielsweise ±12,7°C über- oder unterschreiten, zu einem Abbruch einer Temperaturerfassungskette. Beispielsweise würde die 0x80 im Fall einer Nutzung eines so genannten signed integers den Wert von -0 somit einen ungültigen Wert darstellen. An dieser Stelle muss die Ermittlungskette abgebrochen werden. Ungültige Messwerte können nicht weiter mit 8 Bit dargestellt werden.

Weiterhin sind aus dem Stand der Technik Verbrauchswertmessgeräte bekannt, die erfasste Verbrauchswerte mittels einer Funkkommunikationseinheit an ein Ablesegerät senden. Zum Beispiel sind derartige Verbrauchswertmessgeräte Verbrauchszähler, Wärmezähler, Wärmemengenzähler, Heizkostenverteiler oder andere Verbrauchsdatenmessgeräte. Diese Messgeräte sind beispielsweise an Verbrauchsstellen in Nutzeinheiten oder Abrechnungseinheiten einer Liegenschaft oder eines Gebäudes installiert. Aus der JP 2001241975 A ist beispielsweise ein Aufzeichnungsgerät für Beschleunigungswerte bekannt, welches die Differenz zwischen der gemessenen und der vorherigen Beschleunigung bestimmt und aufzeichnet.

Der Erfindung liegt die Aufgabe zu Grunde, ein gegenüber dem Stand der Technik verbessertes Verfahren zur Speicherung und Übertragung von Messdaten, eine verbesserte Verarbeitungseinheit zur Durchführung des Verfahrens und eine verbesserte Verbrauchswerterfassungseinheit mit einer solchen Verarbeitungseinheit anzugeben. Insbesondere ist es Aufgabe der Erfindung, ein Verfahren zur Speicherung und Übertragung von Messdaten einer Verbrauchswerterfassungseinheit anzugeben, bei welchem die Messdatenermittlung und -speicherung im Fall eines ermittelten ungültigen Messwerts nicht abgebrochen werden und die Speicherung und Übertragung von vergleichsweise geringen Datenmengen zum Beispiel nach der Norm DIN EN 13757-3 ermöglicht werden. Des Weiteren ist es Aufgabe der Erfindung, eine Verbrauchswerterfassungseinheit anzugeben, welche ermöglicht, bei ungültig erfassten Messwerten die Messdatenermittlung und Speicherung fortzuführen.

Hinsichtlich des Verfahrens zur Speicherung und Übertragung von Messdaten wird die Aufgabe erfindungsgemäß mit den Merkmalen des Anspruchs 1 gelöst. Hinsichtlich der Verarbeitungseinheit zur Durchführung des Verfahrens wird die Aufgabe erfindungsgemäß mit den Merkmalen des Anspruchs 9 gelöst und hinsichtlich der Verbrauchswerterfassungseinheit wird die Aufgabe erfindungsgemäß mit den Merkmalen des Anspruchs 10 gelöst.

Vorteilhafte Ausgestaltungen der Erfindung sind Gegenstand der abhängigen Ansprüche.

In dem erfindungsgemäßen Verfahren zur Speicherung und Übertragung von Messdaten wird ein Startwert zur Ermittlung eines ersten Differenzwerts festgelegt.

Erfindungsgemäß wird als erster Differenzwert die Differenz zwischen dem festgelegten Startwert und einem aktuell erfassten Messwert bestimmt, wobei für jeden weiteren aktuell erfassten Messwert als weiterer aktueller Differenzwert die Differenz zwischen dem aktuell erfassten Messwert und dem zuletzt gespeicherten Messwert ermittelt wird. Insbesondere wird jeweils ein aktueller Differenzwert aus dem aktuell erfassten Messwert und dem zuletzt gespeicherten Messwert gebildet. In einer Weiterbildung wird zu Ermittlung eines aktuellen Differenzwerts jeweils die Differenz zwischen einer Summe, gebildet aus dem Startwert und bereits gespeicherter Differenzwerte, insbesondere aller vorherigen Differenzwerte, und dem aktuell erfassten Messwert gebildet. Dies hat den Vorteil, dass Fehler, die durch die Begrenzung vorheriger Differenzwerte gemacht worden sind, berücksichtigt werden. Als Messdaten werden jeweils der Startwert und die ermittelte Differenzwerte in Form vorgegebener Datentypen gespeichert und übertragen. Beispielsweise werden der Startwert in Form von 16 Bit und die Differenzwerte in Form von 8 Bit gespeichert und übertragen, wobei als Datentyp ein so genannter einfacher Datentyp zur Aufnahme eines Werts innerhalb eines entsprechenden Wertebereichs verwendet wird. Der jeweils ermittelte Differenzwert wird mit einem vorgegebenen Wertebereich, insbesondere einem Temperaturbereich, verglichen, wobei der ermittelte Differenzwert gespeichert wird, wenn dieser innerhalb des Wertebereichs liegt, und ein Maximal-Differenzwert oder Minimal-Differenzwert des Wertebereichs gespeichert wird, wenn der Differenzwert außerhalb des Wertebereichs liegt, wobei dem Maximal-Differenzwert oder Minimal-Differenzwert ein Fehlerwert zugeordnet wird.

Mit anderen Worten: Wenn der aktuell ermittelte Differenzwert außerhalb des Wertebereichs liegt, wird dieser Wert als Maximal-Differenzwert oder Minimal-Differenzwert des Wertebereichs gespeichert. Der aktuell ermittelte Differenzwert außerhalb des Wertebereichs wird also ersetzt. Des Weiteren wird zu dem gespeicherten Maximal-Differenzwert oder Minimal-Differenzwert ein Fehlerwert hinterlegt. Der Fehlerwert entspricht dabei einem Differenzbetrag, insbesondere Restbetrag, der bei der Speicherung des Maximal- oder Minimal-Differenzwerts vom wahren, aktuell ermittelten, den Maximal- oder Minimal-Differenzwert über- oder unterschreitenden Differenzwert abgeschnitten wurde. Mit anderen Worten: Der Fehler, der durch die Begrenzung des Differenzwerts gemacht wurde, wird gespeichert. Wenn der Differenzwert innerhalb des Wertebereichs liegt, wird dieser als gültiger Wert erkannt und unverändert gespeichert.

Darüber hinaus wird verstanden, dass eine Darstellung des ermittelten Differenzwerts, welcher den Wertebereich über- oder unterschreitet, mittels des Maximal-Differenzwerts oder des Minimal-Differenzwerts begrenzt wird und nicht als ungültiger Wert gespeichert wird. Mittels des erfindungsgemäßen Verfahrens werden also Fehler beim Zurückrechnen aus der Kette der Differenzwerte toleriert und ein Abbruch vermieden. Das Verfahren toleriert also leichte Fehler beim Zurückrechnen aus der Kette der Differenzwerte, wobei diese über längere Ermittlungsstrecken wieder ausgeglichen werden können.

Insbesondere wird ein solcher Vorgang für alle weiteren Differenzwerte wiederholt. Beispielsweise ermittelt die Verbrauchswerterfassungseinheit Wärmeenergie aus einem Volumenstrom eines zirkulierenden Mediums und dessen Temperaturdifferenz zwischen Vorlauf und Rücklauf. Dabei werden als Messwerte Temperaturmesswerte erfasst. Beispielsweise wird das Verfahren mittels eines Wärmezählers durchgeführt. Der Wärmezähler ist beispielsweise in einem Wasserkreislauf montiert und ermittelt dessen Wärmeabgabe. Dabei erfasst der Wärmezähler die Temperaturen im Vor- und Rücklauf des Kreislaufs sowie das durchströmende Volumen und geht bei einer Verbrauchsberechnung von einer reinen Wärmeabgabe eines Rohrsystems aus. Den Startwert bildet dabei ein Start-Temperaturwert. Der Wertebereich definiert beispielsweise einen Temperaturdifferenzbereich.

Mittels des erfindungsgemäßen Verfahrens wird ermöglicht, kontinuierlich und insbesondere periodisch Differenzwerte und somit ableitbare Messdaten zu ermitteln und zu speichern. Insbesondere wird vermieden, dass im Fall einer ermittelten ungültigen Differenz, welche den vorgegebenen Wertebereich über- oder unterschreitet, eine Messdatenermittlungskette abgebrochen wird. Durch kontinuierlich gespeicherte Differenzwerte kann ein Verbrauchsdatenverlauf verbessert erfasst und dargestellt werden. Zum Beispiel werden die Differenzwerte als Verbrauchsdaten zur Verbrauchswertabrechnung an ein Versorgungsunternehmen übermittelt.

Darüber hinaus können eine Speicherung und Übertragung von Profilen von aus Messwerten resultierenden Messdaten im Wesentlichen kompakt durchgeführt werden. Insbesondere können einmalige Ausreißer in den Messwerten in einfacher Weise begrenzt werden.

Insbesondere wird der jeweils aktuell ermittelte Differenzwert mit dem vorgegebenen Wertebereich verglichen.

In einer Weiterbildung des Verfahrens wird der Fehlerwert bei der Ermittlung jeweils eines weiteren aktuellen Differenzwerts berücksichtigt. Mit anderen Worten: Den Differenzwerten wird jeweils ein Fehlerwert zugeordnet, wobei zur Ermittlung der jeweils aktuellen Differenzwerte (D1 bis Dn) der zuvor gespeicherte Fehlerwert berücksichtigt wird. Insbesondere wird der Fehlerwert in Abhängigkeit des aktuell ermittelten Differenzwerts übernommen oder geändert. Wenn beispielsweise nacheinander folgende Differenzwerte jeweils als gültige Werte erkannt werden, bleibt der Fehlerwert 0. Liegt ein darauffolgender Differenzwert außerhalb des Wertebereichs, wird dieser als ungültig erkannt und der Fehlerwert wird auf den Betrag gesetzt, der bei der begrenzenden Differenzbildung als Rest bis zur vollen Differenz übrig geblieben ist. Umgekehrt wird der Fehlerwert dem nächstmöglichen Differenzwert dazugerechnet. Liegt ein neuer, auch durch einen vorherigen Fehlerwert korrigierter Differenzwert innerhalb des Wertebereiches, wird der neue Fehlerwert zu 0. Ansonsten ist der neue Fehlerwert wieder der Teil, der durch die Begrenzung des Differenzwertes als Rest bis zur vollen Differenz übrig geblieben ist.

Im fortlaufenden Prozess der Bildung weiterer Differenzwerte wird versucht, diesen Fehler wieder in die weiteren Differenzen zu transferieren, soweit dadurch nicht eine neue Überschreitung oder Unterschreitung des Wertebereiches für den Differenzwert auftritt.

Zum Beispiel kann am Schluss eines Mess- und Ermittlungszyklus eine Korrelation der ermittelten Werte, beispielsweise umfassend den Startwert, darauffolgende Messwerte, ermittelte Differenzwerte sowie gespeicherte Differenzwerte und Fehlerwerte, dargestellt und analysiert werden.

Gemäß einer Ausführungsform des Verfahrens wird der Maximal-Differenzwert gespeichert, wenn der Differenzwert den Maximal-Differenzwert des Wertebereichs überschreitet und der Minimal-Differenzwert gespeichert, wenn der Differenzwert den Minimal-Differenzwert des Wertebereichs unterschreitet. Insbesondere werden die ermittelten Differenzwerte jeweils in Form von 8 Bit gespeichert und übertragen. Bei einer 8 Bit Codierung können somit 256 Werte dargestellt werden, wobei der Wert 128, der die ungültige Differenz anzeigt, hier vermieden wird. Der vorgegebene Wertebereich umfasst und definiert die 255 Werte von 129, was als vorzeichenbehafteter Zahlenwert der -127 entsprechen würde über die 0 bis 127. Zum Beispiel können Differenzwerte, insbesondere Temperaturdifferenzwerte bei einer Auflösung von 0,1, insbesondere 0,1°C von -12,7°C bis +12,7°C (inkl. 0°C Unterschied) dargestellt werden. Insbesondere werden die Differenzwerte, die jeweils einem der 255 möglichen Werte des Wertebereichs entsprechen, gespeichert. Differenzwerte, die außerhalb des Wertebereichs liegen, können folglich nicht mehr dargestellt werden. Im erfindungsgemäßen Verfahren wird daher der Maximal-Differenzwert oder der Minimal-Differenzwert gespeichert und nicht der Wert für eine ungültige Differenz, damit ein Abbruch der Ermittlungskette vermieden wird.

Zudem werden die Datenmengen zur Speicherung und Übertragung gering gehalten sowie einmalige Ausreißer in den Messwerten begrenzt. Insbesondere werden Ausreißer mit dem Fehlerwert gekennzeichnet.

Gemäß einer möglichen Ausführungsform des Verfahrens werden zumindest 24 intakte Werte, beispielsweise mit insgesamt nur 25 Byte, gespeichert und übertragen.

Diese mögliche Ausführungsform des Verfahrens sieht vor, dass der Startwert in Form von zumindest 16 Bit gespeichert und übertragen wird. Dadurch kann der Startwert als genauer Wert gespeichert und übertragen werden. Die weiteren Werte werden als Differenzwerte oder begrenzte Differenzwerte oder als Differenzwerte, die vorherige Begrenzungsfehler aufnehmen, oder als wiederum begrenzte Differenzwerte, die vorherige Begrenzungsfehler aufnehmen, zum Startwert oder dem jeweils vorherigen Wert gebildet. Sie werden in dieser möglichen Ausführungsform des Verfahrens als 23 Werte mit 8 Bit gespeichert und übertragen. Mit anderen Worten: Der Startwert wird in einem ersten Format gespeichert und übertragen, wobei die Differenzwerte in einem vom ersten Format unterschiedlichen Format gespeichert und übertragen werden. Das heißt, dass nur der Startwert in ein anderes Format gebracht wird. Die Differenzwerte werden gegenüber dem Startwert wertmäßig begrenzt abgespeichert.

Gemäß einer Weiterbildung des Verfahrens werden der übertragene Startwert und die übertragenen Differenzwerte zur Rekonstruktion aller Werte verwendet.

In einer möglichen Ausgestaltung des Verfahrens werden die Differenzwerte in Form von interpolierten Werten zur Rekonstruktion dargestellt. Insbesondere ähneln die ermittelten Differenzwerte einer Interpolation zwischen einem korrekten Startwert und einem korrekten Endwert. Es ist immer möglich, aus einem Startwert und einer Reihe von Differenzwerten alle Werte, unter Umständen als interpolierte Werte, zu rekonstruieren. Bei großen Sprüngen des Messwerts wird eine Rückrechnung des Messwerts aus einem Startwert und weiteren begrenzten Differenzwerten zu Fehlern führen. Da große Sprünge des Messwerts immer nur in eine Richtung eher unwahrscheinlich sind, kann nach einiger Zeit aus dem Startwert und den so ermittelten Differenzwerten wieder ein unverfälschter Messwert rekonstruiert werden. Insbesondere sind daraus resultierende Verbrauchsdaten ermittelbar. Insbesondere eignet sich das Verfahren für Zustandsgrößen, wie z. B. Temperaturen oder Temperaturdifferenzen, die nicht beliebig weit springen können und in ihrer zeitlichen Entwicklung nicht monoton immer größer oder immer kleiner werden.

Die erfindungsgemäße Verarbeitungseinheit ist zur Durchführung des beschriebenen Verfahrens ausgebildet. Die Verarbeitungseinheit ist beispielsweise in eine Verbrauchswerterfassungseinheit eingesetzt und Bestandteil einer solchen Verbrauchswerterfassungseinheit.

In einer Weiterbildung ist die Verarbeitungseinheit mit einer Verbrauchswerterfassungseinheit zur Ermittlung, Speicherung und Übertragung von Messdaten koppelbar. Beispielsweise ist die Verarbeitungseinheit ausgebildet, jeweils einen Differenzwert zwischen aufeinanderfolgenden gespeicherten Werten zu ermitteln. Ferner ist die Verarbeitungseinheit ausgebildet, die ermittelten Differenzwerte jeweils in Form eines vorgegebenen Datentyps zu speichern und zu übertragen. Beispielsweise ist die Verarbeitungseinheit mit einer Kommunikationseinheit ausgestattet. Die Kommunikationseinheit, beispielsweise in Form einer Sendeeinrichtung, übermittelt, wenn gefordert, die gespeicherten Messdaten an beispielsweise einen Datensammler.

Gemäß einer Weiterbildung umfasst die Verarbeitungseinheit eine spezielle Software. Die Software ist konfiguriert, die Differenzwerte zwischen gespeicherten Werten zu ermitteln, mit dem vorgegebenen Wertebereich zu vergleichen und als entsprechenden Wert zu speichern. Des Weiteren ist die Software konfigurierbar ausgebildet, so dass beispielsweise ein Datentyp zur Speicherung und Übertragung der Differenzwerte einstellbar ist. Weiterhin ist die Software konfigurierbar, um gewünschte zu speichernde und/oder übertragende Datenmengen einzustellen.

Die erfindungsgemäße Verbrauchswerterfassungseinheit umfasst zumindest eine Verarbeitungseinheit zur Durchführung des beschriebenen Verfahrens und zumindest eine Erfassungseinheit zur periodischen Erfassung von Messwerten. Die erfassten Messwerte sind an die Verarbeitungseinheit übermittelbar.

Ausführungsbeispiele der Erfindung werden im Folgenden anhand von Zeichnungen näher erläutert.

Darin zeigen:

Figur 1    schematisch ein Ausführungsbeispiel einer Verbrauchswerterfassungseinheit, und

Figur 2    schematisch ein Ausführungsbeispiel eines Verfahrensablaufs zur Speicherung und Übertragung von mittels der Verbrauchswerterfassungseinheit erfassten Messwerten.

Einander entsprechende Teile sind in allen Figuren mit den gleichen Bezugzeichen versehen.

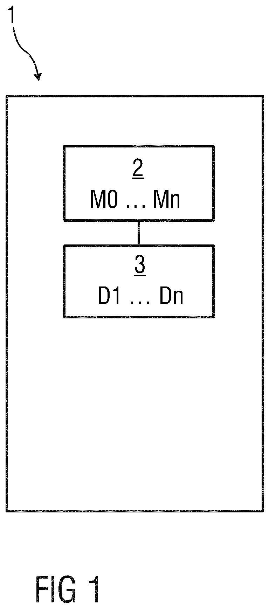

**Figur 1** zeigt schematisch ein Ausführungsbeispiel einer Verbrauchswerterfassungseinheit 1 zur Verbrauchswerterfassung. Beispielsweise ist die Verbrauchswerterfassungseinheit 1 Teil eines Verbrauchswertmessgeräts, eines Wärmezählers oder Heizkostenverteilers. Insbesondere ist die Verbrauchswerterfassungseinheit 1 ausgebildet, erfasste Messwerte zu speichern und zu übertragen.

Die Verbrauchswerterfassungseinheit 1 umfasst eine Erfassungseinheit 2 zur periodischen Erfassung von Messwerten M0 bis Mn.

Weiterhin umfasst die Verbrauchswerterfassungseinheit 1 eine Verarbeitungseinheit 3. Die Verarbeitungseinheit 3 ist beispielsweise mit der Erfassungseinheit 2 datentechnisch gekoppelt. Zum Beispiel werden die von der Erfassungseinheit 2 erfassten Messwerte M0 bis Mn an die Verarbeitungseinheit 3 zur Ermittlung von Messdaten übermittelt. Die Messdaten werden gespeichert und zu gegebenen Zeitpunkten beispielsweise an einen Datensammler übertragen.

Als Messdaten werden jeweils Differenzwerte D1 bis Dn gespeichert und übertragen. Zum Beispiel lässt sich D1 durch M1-M0 berechnen und Dn durch $M_n - M_{n-1}$. D. h. allgemein gilt: $D_x = M_x - M_{x-1}$.

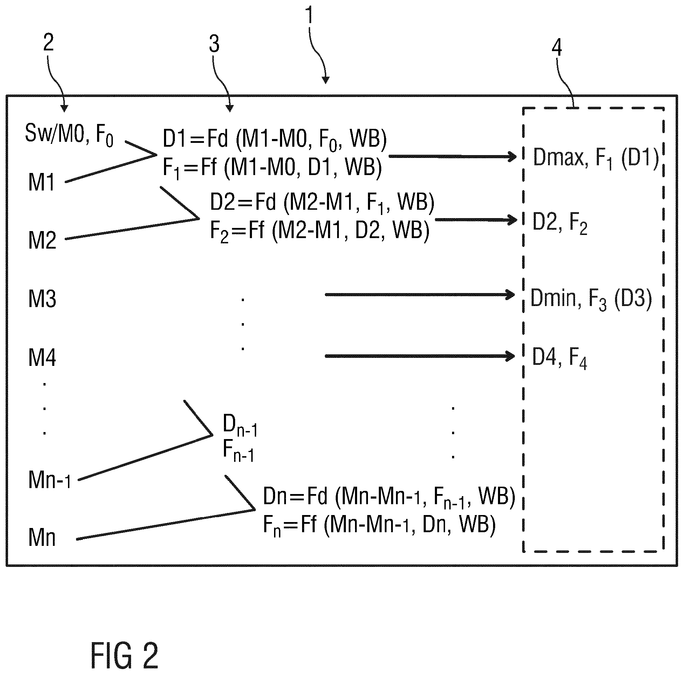

**Figur** 2 zeigt schematisch ein Verfahrensablauf zur Speicherung und Übertragung der gespeicherten Messdaten. Insbesondere läuft der Verfahrensablauf innerhalb der Verarbeitungseinheit 3 ab.

Die Verbrauchswerterfassungseinheit 1 umfasst zumindest eine Speichereinheit 4 zur Speicherung der ermittelten Messdaten. Des Weiteren umfasst die Verbrauchswerterfassungseinheit 1 zumindest eine nicht näher dargestellte Übertragungseinheit zur Übertragung der gespeicherten Daten. Beispielsweise umfasst die Verbrauchswerterfassungseinheit 1 eine Kommunikationseinheit, beispielsweise in Form einer Funkkommunikationseinheit oder anderer Kommunikationsschnittstellen.

Zum Beispiel umfasst die Verarbeitungseinheit 3 eine Software, mittels welcher ein Startwert Sw festgelegt wird. Zum Beispiel ist in der Verarbeitungseinheit 3 ein Startwert Sw hinterlegt. Alternativ wird ein Messwert M0 erfasst und als Startwert Sw festgelegt.

Ein erster Differenzwert D1 wird aus dem festgelegten Startwert Sw oder M0 und einem aktuell erfassten Messwert M1 gebildet. Für jeden weiteren aktuell erfassten Messwert M2 bis Mn wird jeweils die Differenz zu dem zuletzt gespeicherten Differenzwert D1 bisDn-1 ermittelt.

Beispielsweise ist die Verarbeitungseinheit 3 ausgebildet, als Messdaten den Startwert Sw und die weiteren Differenzwerte D1 bis Dn jeweils in Form eines vorgegebenen Datentyps zu speichern und zu übertragen. Beispielsweise werden der Startwert Sw in Form von 16 Bit und die weiteren Differenzwerte D1 bis Dn in Form von 8 Bit gespeichert und übertragen. Der Startwert Sw wird beispielsweise mit 16 Bit codiert, um den Startwert Sw als vollständigen und sehr genauen Wert darzustellen. Die anschließend ermittelten Differenzwerte D1 bis Dn werden beispielsweise jeweils in Form von 8 Bit dargestellt. Damit können beispielsweise zumindest 24 Messdaten mit nur 25 Byte gespeichert und übertragen werden.

Der jeweils aktuell ermittelte Differenzwert D 1 bis Dn wird mit einem in der Verarbeitungseinheit 3 hinterlegten Wertebereich WB verglichen. Zum Beispiel wird eine Auflösung von 0,1°C des Wertebereichs WB vorgegeben. Bei einer 8 Bit Codierung können somit 256 Werte dargestellt werden. Der vorgegebene Wertebereich WB umfasst und definiert davon 255 Werte. Ein 256. Wert, der die ungültige Differenz darstellt, wird nicht benutzt, bzw. vermieden. Zum Beispiel können die Differenzwerte D1 bis Dn, insbesondere Temperaturdifferenzwerte, von - 12,7°C bis +12,7°C (inkl. 0°C) dargestellt werden. Insbesondere werden die Differenzwerte D1 bis Dn, die jeweils einem der 255 möglichen Werte des Wertebereichs WB entsprechen, gespeichert. Beispielsweise wird ein Profil von Werten von zum Beispiel 24 ermittelten Temperaturwerten, umfassend einen vollen Startwert Sw und eine Kette von 23 im Wertebereich WB begrenzten Differenzwerten D1 bis Dn, sehr kompakt und damit kurz sowie energiesparend übermittelt.

Der Wertebereich WB umfasst einen Minimal-Differenzwert Dmin und einen Maximal-Differenzwert Dmax. Beispielsweise weist der Minimal-Differenzwert Dmin den Wert von -12,7°C auf. Der Maximal-Differenzwert Dmax weist beispielsweise den Wert von +12,7°C auf.

Der aktuell ermittelte Differenzwert D2, D4 wird als solcher gespeichert, wenn dieser innerhalb des vorgegebenen Wertebereichs WB liegt. Wenn der ermittelte Differenzwert D1, D3 außerhalb des Wertebereichs WB liegt, wird für den aktuell ermittelten Differenzwert D der Maximal-Differenzwert Dmax oder der Minimal-Differenzwert Dmin des Wertebereichs WB gespeichert, wobei jedem Differenzwert D1 bis Dn jeweils ein Fehlerwert F zugeordnet wird. Der Fehlerwert F ist 0, wenn der Differenzwert, wie D2 und D4, nicht durch die Begrenzung auf den Maximal- oder Minimalwert beschnitten wurde und bei der begrenzenden Differenzbildung ist der Fehlerwert F der Rest, der bis zur vollen Differenz übrig geblieben ist.

In einer Fortbildung des Verfahrens wird bei jeder neuen Differenzbildung der Fehlerwert F aus der vorhergehenden Differenzbildung mit einbezogen.

Der dem Startwert Sw und/oder dem Messwert M0 zugeordnete Fehlerwert F wird im dargestellten Ausführungsbeispiel mit $F_0$ ausgedrückt. Dieser Fehlerwert $F_0$ ist immer 0, da von einem vollständig darstellbaren Wert ausgegangen wird. Des Weiteren wird im dargestellten Ausführungsbeispiel den Differenzwerten D1 bis Dn jeweils ein Fehlerwert $F_1$ bis $F_n$ zugeordnet.

Allgemein gilt, dass ein Differenzwert $D_x$ und ein diesem Differenzwert $D_x$ zugeordneter Fehlerwert $F_x$ eine Funktion aus den Messwerten $M_x$ und $M_{x-1}$ oder aus dem Startwert Sw und dem Fehlerwert $F_{x-1}$ ist.

Mit anderen Worten: Zur Ermittlung des jeweils aktuellen Differenzwerts D1 bis Dn wird der zuvor gespeicherte

Fehlerwert $F_0$ bis $F_{n-1}$ berücksichtigt.

Die Differenzen werden mit der Funktion Fd ermittelt.

Die Fehler werden mit der Funktion Ff ermittelt, wobei beispielsweise für D1 bis Dn gilt:

$$D1 = Fd(M1 - M0, F_0, WB) \text{ und } F_1 = Ff(M1 - M0, D1, WB),$$

$$Dn = Fd(M_n - M_{n-1}, F_{n-1}, WB) \text{ und } F_n = Ff(M_n - M_{n-1}, Dn, WB),$$

D. h. allgemein gilt:

$$D_x = Fd(M_x - M_{x-1}, F_{x-1}, WB) \text{ und } F_x = Ff(M_x - M_{x-1}, D_x, WB).$$

Zur näheren Beschreibung des dargestellten Ausführungsbeispiels:
Tritt bei der Ermittlung, d. h. Berechnung des ersten Differenzwerts D1 eine Zahl auf, die größer ist als der gültige Wertebereich WB zum Speichern und Übertragen der Differenzwerte D1 bis Dn, wird ein größtmöglicher Wert für die Darstellung des Differenzwerts D1 im dort vereinbarten Wertebereich WB genommen. In diesem Fall wird der Maximal-Differenzwert Dmax und zusätzlich der Fehlerwert $F_1$, der durch eine Begrenzung des Differenzwerts D1 gemacht wurde, gespeichert. Mit anderen Worten: Für den ermittelten Differenzwert D1 wurde der Maximal-Differenzwert Dmax gespeichert, da der ermittelte Differenzwert D1 außerhalb des gültigen Wertebereichs WB liegt. Der ermittelte Differenzwert D1 überschreitet den Maximal-Differenzwert Dmax des Wertebereichs WB.

Wurde der erste Differenzwert D1 mit einem zugeordneten Fehlerwert $F_1$ gespeichert, wird der Fehlerwert $F_1$ bei der Ermittlung des darauffolgenden Differenzwerts D2 mitberücksichtigt. Insbesondere wird der Fehlerwert $F_1$ in Abhängigkeit des jeweils darauffolgenden ermittelten Differenzwerts D2 übernommen oder geändert. Der Fehlerwert $F_1$ entspricht dabei einem Differenzbetrag, d. h. Restbetrag, zwischen dem gespeicherten Maximal-Differenzwert Dmax und dem ermittelten den Wertebereich WB überschreitenden Differenzwert D1.

Wird also ein Differenzwert D2 ermittelt, der im Wertebereich WB zum Speichern und Übertragen der Differenzwerte D1 bis Dn gültig ist, wird der Fehlerwert $F_2$ auf den Wert 0 gesetzt und gespeichert. Dieser Fehlerwert $F_2$ wird bei der Berechnung des nächsten Differenzwerts D3 mitberücksichtigt. Der ermittelte Differenzwert D3 liegt außerhalb des gültigen Wertebereichs WB, insbesondere weist der Differenzwert D3 eine Zahl auf, die den Minimal-Differenzwert Dmin des gültigen Wertebereichs WB unterschreitet. Für den Differenzwert D3 wird der Minimal-Diffrenzwert Dmin genommen, wobei der Fehlerwert $F_3$ des Differenzwerts D3 in der Berechnung des Differenzwerts D4 benutzt wird.

Der Differenzwert D4 befindet sich innerhalb des gültigen Wertebereichs WB. Der Differenzwert D4 wird als solcher gespeichert und der dem Differenzwert D4 zugeordnete Fehlerwert $F_4$ wird auf 0 gesetzt und gespeichert. Dem Fehlerwert $F_4$ des Differenzwerts D4 wird also der Wert 0 zugeordnet.

Der übertragene Startwert Sw und die übertragenen Differenzwerte D1 bis Dn werden zur Rekonstruktion aller Werte verwendet. Dabei werden die Differenzwerte D1 bis Dn in Form von interpolierten Werten dargestellt.

Durch die Begrenzung der Differenzwerte D1 bis Dn wird bei der Rückrechnung aus D1 und D3 ein abweichender Wert ermittelt.

Durch die Einbeziehung des Fehlerwerts F aus den vorherigen Differenzberechnungen wird beispielsweise aus den Differenzwerten D2 und D4 wieder der exakte Messwert M3 rekonstruiert. Die rekonstruierbaren Messwerte M1 und M3 sind ähnlich einer Mittelwertbildung zwischen den Werten M0 und M2 bzw. M2 und M4 interpretierbar. In bestimmten Anwendungsfällen sind solche Abweichungen akzeptabel.

## BEZUGSZEICHENLISTE

1     Verbrauchswerterfassungseinheit
2     Erfassungseinheit
3     Verarbeitungseinheit
4     Speichereinheit

D1 bis Dn     Differenzwert
Dmin     Minimal-Differenzwert
Dmax     Maximal-Differenzwert

| $F_0$ bis $F_n$ | Fehlerwert |
|---|---|
| Fd, Ff | Funktion |
| M1 bis Mn | Messwert |
| Sw | Startwert |
| WB | Wertebereich |

**Patentansprüche**

1. Verfahren zur Speicherung und Übertragung von Messdaten, wobei als Messdaten jeweils Differenzwerte (D1 bis Dn) zwischen zeitlich aufeinanderfolgenden Messwerten (M1 bis Mn) gespeichert und übertragen werden, wobei

   - zur Ermittlung eines ersten Differenzwerts (D1) ein Startwert (Sw) festgelegt wird und als erster Differenzwert (D1) die Differenz zwischen dem festgelegten Startwert (Sw) und einem erstmalig erfassen Messwert (M1) ermittelt wird,

   **dadurch gekennzeichnet, dass**

   - der jeweils ermittelte Differenzwert (D1 bis Dn) mit einem vorgegebenen Wertebereich (WB) mit einem Maximal-Differenzwert (Dmax) und einem Minimal-Differenzwert (Dmin) verglichen wird, wobei
   - der aktuell ermittelte Differenzwert (D2, D4) gespeichert wird, wenn dieser innerhalb des vorgegebenen Wertebereichs (WB) liegt, und
   - für den aktuell ermittelten Differenzwert (D1, D3) der Maximal-Differenzwert (Dmax) oder der Minimal-Differenzwert (Dmin) des Wertebereichs (WB) gespeichert wird, wenn der ermittelte Differenzwert (D1, D3) außerhalb des Wertebereichs (WB) liegt.

2. Verfahren nach Anspruch 1,
   wobei für jeden weiteren aktuellen Differenzwert (D2 bis Dn) die Differenz zwischen einer Summe, gebildet aus dem Startwert (Sw) und bereits gespeicherter Differenzwerte (D1 bis Dn-1), und dem aktuell erfassten Messwert (M2 bis Mn) ermittelt wird.

3. Verfahren nach Anspruch 1 oder 2,
   **dadurch gekennzeichnet, dass** dem Maximal-Differenzwert (Dmax) oder dem Minimal-Differenzwert (Dmin) ein Fehlerwert ($F_1$, $F_3$ ) zugeordnet und gespeichert wird.

4. Verfahren nach einem der vorhergehenden Ansprüche,
   **dadurch gekennzeichnet, dass** für den aktuell ermittelten Differenzwert (D1) der Maximal-Differenzwert (Dmax) gespeichert wird, wenn der aktuell ermittelte Differenzwert (D1) den Maximal-Differenzwert (Dmax) des Wertebereichs (WB) überschreitet oder der Minimal-Differenzwert (Dmin) gespeichert wird, wenn der aktuell ermittelte Differenzwert (D3) den Minimal-Differenzwert (Dmin) des Wertebereichs (WB) unterschreitet.

5. Verfahren nach einem der vorhergehenden Ansprüche,
   **dadurch gekennzeichnet, dass** den Differenzwerten (D1 bis Dn) jeweils ein Fehlerwert ($F_1$ bis $F_n$) zugeordnet wird, wobei zur Ermittlung der jeweils aktuellen Differenzwerte (D1 bis Dn) der zuvor gespeicherte Fehlerwert ($F_0$ bis $F_{n-1}$) berücksichtigt wird.

6. Verfahren nach einem der vorhergehenden Ansprüche,
   **dadurch gekennzeichnet, dass** der Startwert (Sw) in einem ersten Format gespeichert und übertragen wird, wobei die Differenzwerte (D1 bis Dn) in einem vom ersten Format unterschiedlichen Format gespeichert und übertragen werden.

7. Verfahren nach einem der vorhergehenden Ansprüche,
   **dadurch gekennzeichnet, dass** die Differenzwerte (D1 bis Dn) jeweils in Form von zumindest 8 Bit gespeichert und übertragen werden.

8. Verfahren nach einem der vorhergehenden Ansprüche,
   **dadurch gekennzeichnet, dass** eine Auflösung des Wertebereichs (WB) vorgegeben wird.

9. Verarbeitungseinheit (3) für eine Verbrauchswerterfassungseinheit (1), wobei die Verarbeitungseinheit (3)

   - eine Speichereinheit (4) zur Speicherung von Messwerten und
   - eine Übertragungseinheit zur Übertragung von gespeicherten Daten aufweist, wobei die Verarbeitungseinheit (3) dazu eingerichtet ist, ein Verfahren zur Speicherung und Übertragung von Messdaten nach einem der vorhergehenden Ansprüche 1 bis 8 durchzuführen.

10. Verbrauchswerterfassungseinheit (1) mit zumindest einer Verarbeitungseinheit (3) nach Anspruch 9.

**Claims**

1. Method for storing and transmitting measurement data, wherein difference values (D1 to Dn) between temporally successive measurement values (M1 to Mn) are in each case stored and transmitted as measurement data, wherein

   - in order to determine a first difference value (D1), a start value (Sw) is defined and the difference between the defined start value (Sw) and a measurement value (M1) recorded for the first time is determined as the first difference value (D1),

   **characterized in that**

   - the respectively determined difference value (D1 to Dn) is compared with a predefined value range (WB) having a maximum difference value (Dmax) and a minimum difference value (Dmin), wherein
   - the currently determined difference value (D2, D4) is stored if it lies within the predefined value range (WB), and
   - the maximum difference value (Dmax) or the minimum difference value (Dmin) of the value range (WB) is stored for the currently determined difference value (D1, D3) if the determined difference value (D1, D3) lies outside the value range (WB).

2. Method according to Claim 1,
   wherein the difference between a sum, formed from the start value (Sw) and difference values (D1 to Dn-1) already stored, and the currently recorded measurement value (M2 to Mn) is determined for each further current difference value (D2 to Dn).

3. Method according to Claim 1 or 2,
   **characterized in that** an error value ($F_1$, $F_3$) is assigned to the maximum difference value (Dmax) or to the minimum difference value (Dmin) and is stored.

4. Method according to any of the preceding claims,
   **characterized in that**, for the currently determined difference value (D1), the maximum difference value (Dmax) is stored if the currently determined difference value (D1) exceeds the maximum difference value (Dmax) of the value range (WB), or the minimum difference value (Dmin) is stored if the currently determined difference value (D3) falls below the minimum difference value (Dmin) of the value range (WB).

5. Method according to any of the preceding claims,
   **characterized in that** an error value ($F_1$ to $F_n$) is respectively assigned to the difference values (D1 to Dn), wherein the previously stored error value ($F_0$ to $F_{n-1}$) is taken into account in order to determine the respectively current difference values (D1 to Dn).

6. Method according to any of the preceding claims,
   **characterized in that** the start value (Sw) is stored and transmitted in a first format, wherein the difference values (D1 to Dn) are stored and transmitted in a format different from the first format.

7. Method according to any of the preceding claims,
   **characterized in that** the difference values (D1 to Dn) are each stored and transmitted in the form of at least 8 bits.

8. Method according to any of the preceding claims,
   **characterized in that** a resolution of the value range (WB) is predefined.

9. Processing unit (3) for a consumption value recording unit (1), wherein the processing unit (3) comprises

- a storage unit (4) for storing measurement values and
- a transmission unit for transmitting stored data,

wherein the processing unit (3) is configured to carry out a method for storing and transmitting measurement data according to any of the preceding Claims 1 to 8.

10. Consumption value recording unit (1) comprising at least one processing unit (3) according to Claim 9.

**Revendications**

1. Procédé de mémorisation et de transmission de données de mesure, les données de mesure mémorisées et transmises étant respectivement des valeurs de différence (D1 à Dn) entre des valeurs de mesure (M1 à Mn) successives dans le temps,

- une valeur de départ (Sw) étant fixée en vue de déterminer une première valeur de différence (D1) et la première valeur de différence (D1) déterminée étant la différence entre la valeur de départ (Sw) fixée et une valeur de mesure (M1) acquise pour la première fois,

**caractérisé en ce que**

- la valeur de différence (D1 à Dn) respectivement déterminée est comparée avec une plage de valeurs (WB) prédéfinie ayant une valeur de différence maximale (Dmax) et une valeur de différence minimale (Dmin),
- la valeur de différence (D2, D4) actuelle déterminée étant mémorisée lorsque celle-ci se trouve à l'intérieur de la plage de valeurs (WB) prédéfinie, et
- pour la valeur de différence (D1, D3) actuelle déterminée, la valeur de différence maximale (Dmax) ou la valeur de différence minimale (Dmin) de la plage de valeurs (WB) étant mémorisée lorsque la valeur de différence (D1, D3) déterminée se trouve en dehors de la plage de valeurs (WB).

2. Procédé selon la revendication 1, la différence entre une somme, formée par la valeur de départ (Sw) et les valeurs de différence (D1 à Dn-1) déjà mémorisée, et les valeurs de mesure (M2 à Mn) actuelle acquises étant déterminée pour chaque valeur de différence (D2 à Dn) actuelle supplémentaire.

3. Procédé selon la revendication 1 ou 2, **caractérisé en ce qu'**une valeur d'erreur ($F_1$, $F_3$) est associée à la valeur de différence maximale (Dmax) ou la valeur de différence minimale (Dmin) et mémorisée.

4. Procédé selon l'une des revendications précédentes, **caractérisé en ce que** pour la valeur de différence (D1) actuelle déterminée, la valeur de différence maximale (Dmax) est mémorisée lorsque la valeur de différence (D1) actuelle déterminée dépasse la valeur de différence maximale (Dmax) de la plage de valeurs (WB) ou la valeur de différence minimale (Dmin) est mémorisée lorsque la valeur de différence (D3) actuelle déterminée devient inférieure à la valeur de différence minimale (Dmin) de la plage de valeurs (WB).

5. Procédé selon l'une des revendications précédentes, **caractérisé en ce qu'**une valeur d'erreur ($F_1$ à $F_n$) est respectivement associée aux valeurs de différence (D1 à Dn), la valeur d'erreur ($F_0$ à $F_{n-1}$) mémorisée précédemment étant prise en compte pour la détermination des valeurs de différence (D1 à Dn) respectivement actuelles.

6. Procédé selon l'une des revendications précédentes, **caractérisé en ce que** la valeur de départ (Sw) est mémorisée et transmise dans un premier format, les valeurs de différence (D1 à Dn) étant mémorisées et transmises dans un format différent du premier format.

7. Procédé selon l'une des revendications précédentes, **caractérisé en ce que** les valeurs de différence (D1 à Dn) sont respectivement mémorisées et transmises sous la forme d'au moins 8 bits.

8. Procédé selon l'une des revendications précédentes, **caractérisé en ce qu'**une résolution de la plage de valeurs (WB) est prédéfinie.

9.  Unité de traitement (3) pour une unité d'acquisition de valeurs de consommation (1), l'unité de traitement (3) possédant

    - une unité de mémorisation (4) destinée à mémoriser des valeurs de mesure et
    - une unité de transmission destinée à transmettre des données mémorisées, l'unité de traitement (3) étant conçue pour mettre en oeuvre un procédé de mémorisation et de transmission de données de mesure selon l'une des revendications 1 à 8 précédentes.

10. Unité d'acquisition de valeurs de consommation (1) pourvue d'au moins une unité de traitement (3) selon la revendication 9.

FIG 1

$Sw/M0, F_0$

M1

$D1 = Fd\ (M1\text{-}M0, F_0, WB)$
$F_1 = Ff\ (M1\text{-}M0, D1, WB)$

$Dmax, F_1\ (D1)$

M2

$D2 = Fd\ (M2\text{-}M1, F_1, WB)$
$F_2 = Ff\ (M2\text{-}M1, D2, WB)$

$D2, F_2$

M3

$Dmin, F_3\ (D3)$

M4

$D4, F_4$

$D_{n-1}$
$F_{n-1}$

Mn-1

$Dn = Fd\ (Mn\text{-}Mn\text{-}1, F_{n-1}, WB)$
$F_n = Ff\ (Mn\text{-}Mn\text{-}1, Dn, WB)$

Mn

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2001241975 A